# EUROPEAN PATENT APPLICATION

(11) **EP 2 546 121 A1**
(43) Date of publication of application: **16.01.2013**
(21) Application number: 12176296.7
(22) Date of filing: 13.07.2012
(51) Int. Cl.: B62B 3/00, B62B 5/00

(54) **Thermally insulated cart for transporting ice**

(30) Priority: 15.07.2011 IT MI20111322
(71) Applicant: Lanzani, Emanuele, 20146 Milano (IT)
(72) Inventor: Lanzani, Emanuele, 20146 Milano (IT)
(74) Representative: Rapisardi, Mariacristina

(57) **Abstract**

A thermally insulated cart (1) for depositing and transporting ice comprises a body having walls (2, 3, 4, 5) which delimit a chamber for containing the ice, having at the top an access opening (6) and one or more removable lids (7) for closing said access opening (6), and is equipped with means for seating the lids (7) on the outside of at least one delimiting wall (2, 3, 4, 5), and a removable and height-adjustable handle, and is equipped with means for seating the lids on the outside of at least one delimiting wall (2, 3, 4, 5).

## Description

The present invention refers to a thermally insulated cart for depositing and transporting ice.

Carts of this type can be used separately or in the context of a system of storage and transport of ice which provides for one or more large stationary deposits from which the ice is taken to allocate it to the carts thus permitting its transport and distribution.

Currently the majority of the carts present in commerce have an upper opening for access to the deposit of ice, covered by a single lid or a sliding double lid.

Normally the lid must be removed at the time of loading the ice and in this case the lid is either placed temporarily in a place distant from the cart, or is made to slide in such a way as to free, but only partially, the upper access opening, thus creating an obstacle.

In the first case there is a risk that the lid becomes contaminated because it comes into contact with parts or areas that are not clean and, once placed over the cart to close it, risks contaminating the ice contained in it. Furthermore, a placement distant from the cart makes possible the losing and immediate unavailability of the covers.

In the second case access for loading and unloading the ice is limited, and it is not possible, for the entire width of the access opening, to insert ice-carrying baskets which are normally provided as an option to reduce the weight of ice which the user must lift.

Another peculiarity of the current carts is that the handle has a single enforced fixing position not removable from the body of the cart containing the ice.

The technical task which the present invention sets itself is, therefore, to make a thermally insulated cart for depositing and transporting ice which makes it possible to eliminate the technical disadvantages complained of in the known art.

Within the scope of this technical task an object of the invention is to make a thermally insulated cart for depositing and transporting ice, suitable for maintaining the necessary hygienic conditions in the process of loading, unloading and transporting the ice.

Another object of the invention is to make a thermally insulated cart for depositing and transporting ice which allows easier execution of the stages of loading, transport and unloading the ice.

Another object of the invention is to make a thermally insulated cart for depositing and transporting ice with better ergonomics.

Not the last object of the invention is to make a thermally insulated cart for depositing and transporting ice which is compact and versatilely adaptable to the needs of the operator.

The technical task and these and other objects according to the present invention are achieved by making a thermally insulated cart for depositing and transporting ice, comprising a body having walls which delimit a chamber for containing the ice having at the top an access opening, and at least one removable lid for closing said access opening, **characterized in that** it has means for seating said at least one lid on the outside of at least one of said delimiting walls.

Other characteristics of the present invention are defined, furthermore, in the claims which follow.

Further characteristics and advantages of the invention will become more evident from the description of a preferred, but not exclusive, embodiment of the thermally insulated cart for depositing and transporting ice according to the invention, illustrated by way of indication but without limiting effect in the attached drawings, in which:

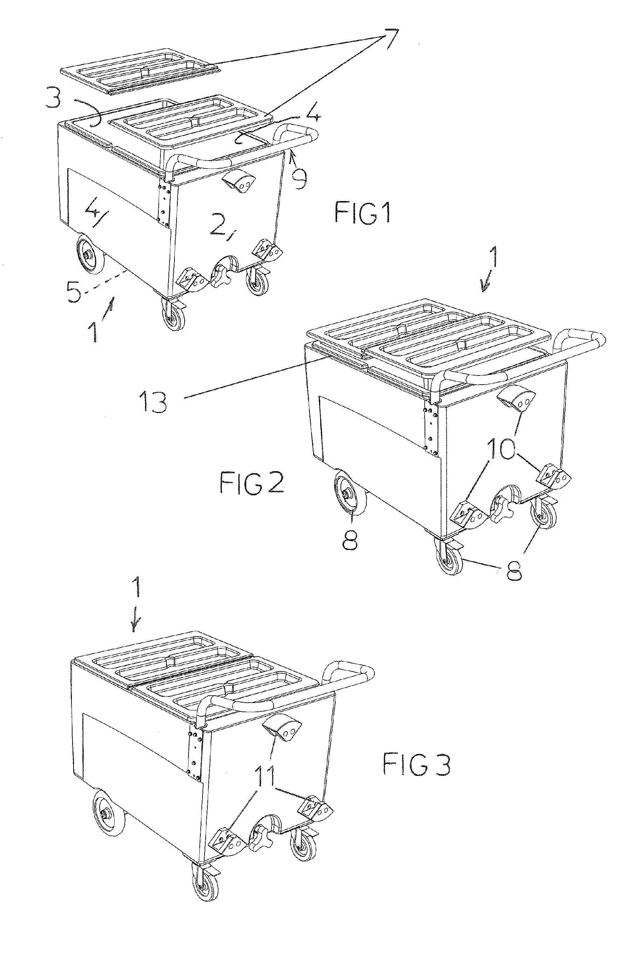

figures 1 and 2 show an axonometric view of the cart with the lids removed;
figure 3 shows an axonometric view of the cart with the lids applied as closure for the opening for access to the deposit of ice;

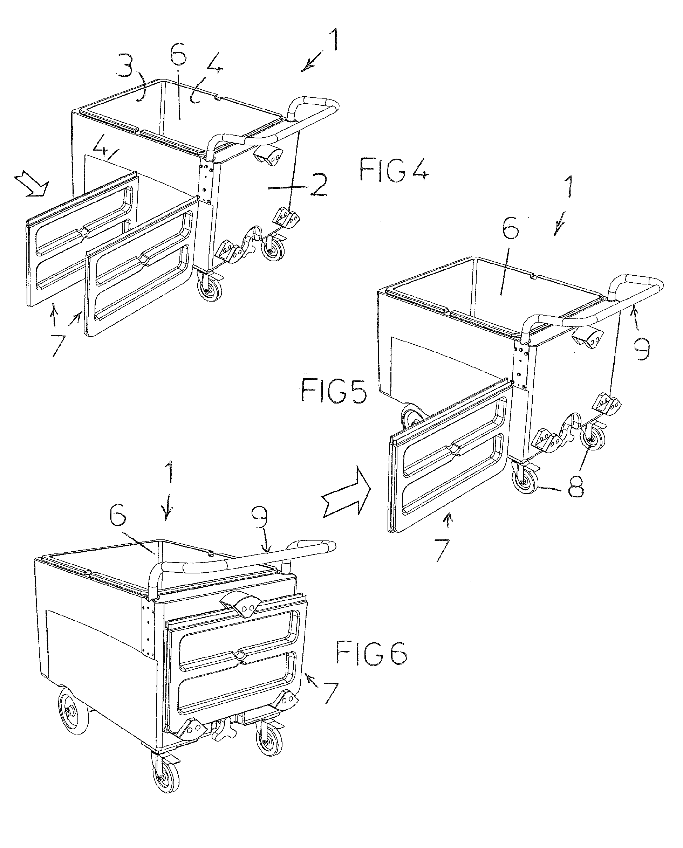

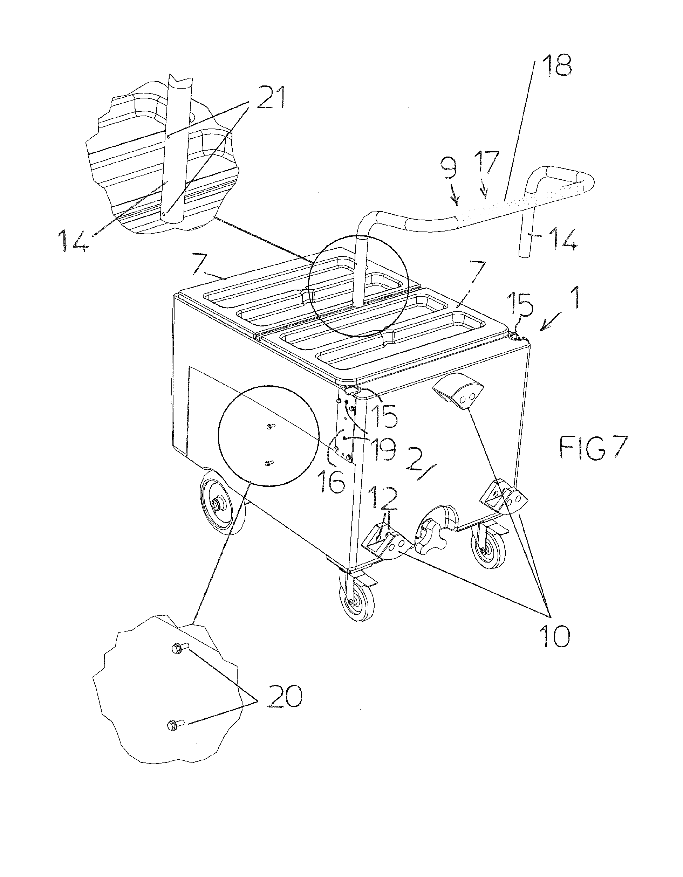

figures 4, 5 and 6 show the sequential stages of inserting the lids into the hooking blocks present on the outside of the front wall of the body of the cart; and figure 7 shows an axonometric view of the cart with the lids closed and the handle removed from the body of the cart;

With reference to the mentioned drawings, a thermally insulated cart for depositing and transporting ice is shown, indicated comprehensively by the reference number 1.

The cart 1 comprises a body having a front wall 2, a rear wall 3, opposed lateral walls 4, and a bottom wall 5 delimiting a chamber for containing the ice having an access opening 6 on top.

The cart is equipped furthermore with at least one and in particular, as shown, two removable lids 7 for closing the upper opening 6.

The delimiting walls 2, 3, 4, and 5 are rigid and, in combination with the provided lids 7 applied to the access opening 6, completely close the chamber to optimize the thermal insulation.

The body of the cart has a longitudinal axis of extension in a direction parallel to the resting plane and has at least front and rear wheels 8 resting on the ground attached to the outer side of the bottom wall 5.

The front wall 2, the rear wall 3, the opposed lateral walls 4, and the bottom wall 5 of the body of the cart 1 have preferably a quadrangular configuration, in particular rectangular, and a substantially flat extension, as also have the lids 7.

The cart 1 is completed in a frontal position by a handle 9 graspable by the operator.

One of the salient aspects of the cart consists in the provision, at the outer side of at least one outer side of at least one delimiting wall 2, 3, 4, 5, and preferably of the front wall 2 of the body, of suitable seating means for the lids 7.

Advantageously, the seating means are configured and arranged in such a way as to hold the lids 7 in a position substantially parallel to the front wall 2 of the body of the cart 1.

Advantageously furthermore, the seating means are configured and arranged in such a way as to hold the lids in a position substantially adjacent to the front wall 2 of the body of the cart 1.

The seating means comprise preferably a plurality of blocks 10 having an hooking seat 11 for the peripheral edge of the lids 7.

The blocks 10 are preferably configured and arranged in such a way as to allow the lateral insertion of the lids 7 by means of translation parallel to their plane of positioning.

In the specific application two lower blocks 10 are provided, aligned in the direction of the width of the cart 1 and a single upper block 10 distanced from the lower blocks 10 by an amount substantially equal to the dimension of the width of the lids 7.

The dimension of the hooking seats 11 in the direction of the length of the cart 1 is substantially equal to the sum of the heights of the lids 7 in such a way that the lids 7, once inserted, are detained by the blocks 10 without substantial possibility of movement.

Preferably the blocks 10 are made of rubber so as not to damage the lids 7.

Means are also provided for removable fixing of the blocks 10 onto the front wall 2 of the body of the cart 1, in particular suitable holes 12 in the blocks 10 for fixing screws (not shown) to the front wall 2 of the body of the cart 1. In this way it is possible, in the event of despatch, to remove the blocks 10 and insert them inside the cart 1 to limit the bulk of the latter.

Preferably the two lids 7 are configured in such a way that the inner side of the former has a shape matching the outer side of the latter to mate with the former when it is superimposed on it. The stack of lids thus obtained consequently has a conveniently limited height.

To reposition the lids 7 when the access opening 6 is opened, the lids 7 are lifted and stacked and the stack of lids 7 thus obtained is translated parallel to the positioning plane of the lids 7 until it is fitted into the housings 11 in all the block 10.

Preferably the number of lids 7 is chosen in such a way that in the replaced position they are entirely contained within the peripheral profile of the delimiting wall 2, 3, 4, 5 of the body of the cart 1 to which they are hooked.

Preferably, to avoid the lids 7 accidentally falling off when they are applied as closure to the access opening 6, suitable means are provided for fitting together the peripheral edge of the inside of each lid 7 and the top peripheral edge of the body of the cart 1 which delimits the access opening 6.

The fitting means comprise in particular at least one projection engageable in a corresponding recess (not shown) of mating shape. In the specific case the projection 13 is formed along the top peripheral edge of the body of the cart 1 and the recess is formed along the peripheral edge of the inner side of each lid 7, but the arrangement of the projection 13 and the recess can be inverted.

Another important characteristic of the cart 1 consists in the fact of providing means for a removable fixing of the handle 9 to the body of the cart 1.

This solution permits the removal and insertion of the handle 9 into the inside of the body of the cart 1, and consequently facilitates the transport and storage of the cart 1 which as a result is in fact of more limited bulk.

In addition this solution allows substitution of the handle 9 to customize its operation.

The handle 9 is in particular a profiled steel bar and has at least in its central portion 17 a coating 18 which insulates and ensures a firm grip even in the presence of moisture.

The means for removable fixing of the handle 9 to the body of the cart 1 comprise in particular, for each terminal part 14 of the handle 9, a respective insertion channel 15 fashioned in front position in a respective lateral wall 4 of the body of the cart 1, and a respective fixing bracket 16 fixed to the respective lateral wall 4 in a position facing the respective insertion channel 15.

The fixing bracket 16 has holes 19 for fixing screws 20 engageable in threaded inserts 21 present on the terminal part 14 of the handle 9.

Finally means can also be provided for adjusting in height the fixing position of the handle 9 to the body of the cart 1.

In the case under examination the adjustment means can be obtained for example by increasing the number of holes 19 in such a way as to select each time the holes 19 to be aligned with the inserts 21 depending on the height at which the operator desires the handle 9 to be positioned.

It is in fact established that the cart according to the invention is particularly advantageous because it responds to the requirements of hygiene and ergonomics, compactness and simplification of the logistics involved with its transportation and storage.

Advantageously, the lids 7 when they are replaced in the blocks 10 do not cause an increase in the overall bulk of the cart 1.

Furthermore, the lids 7 being always fittable to the cart 1 even when the access opening 9 to the chamber containing the ice is open prevents the lids 7 being left in contact with the floor or other contaminated parts, and at the same time there is no risk of losing the lids 7 or of not having them to hand when it is necessary to cover the access openings 6.

The thermally insulated cart for depositing and transporting ice thus conceived is susceptible of numerous modifications and variants, all falling within the scope of the inventive concept; all the details are furthermore replaceable by technically equivalent elements.

In practice the materials employed and also the dimensions can be any according to the requirements and the state of the art.

## Claims

1. A thermally insulated cart (1) for depositing and transporting ice, comprising a body having walls (2, 3, 4, 5) which delimit a chamber for containing the ice having at the top an access opening (6) and at least one removable lid (7) for closing said access opening (6), **characterized in that** it has means for seating said at least one lid (7) on the outside of at least one of said delimiting walls (2, 3, 4, 5).

2. The thermally insulated cart (1) for depositing and transporting ice according to claim 1, **characterized in that** said seating means are provided at the outside of the front delimiting wall (2) of the chamber for containing the ice.

3. The thermally insulated cart (1) for depositing and transporting ice according to either of the preceding claims, **characterized in that** said seating means are configured and disposed in such a way as to keep said at least one lid (7) in a position which is substantially parallel to said at least one delimiting wall (2, 3, 4, 5).

4. The thermally insulated cart (1) for depositing and transporting ice according to any of the preceding claims, **characterized in that** said seating means are configured and disposed in such a way as to keep said at least one lid (7) in a position which is substantially adjacent to said at least one delimiting wall (2, 3, 4, 5).

5. The thermally insulated cart (1) for depositing and transporting ice according to any of the preceding claims, **characterized in that** said seating means comprise a plurality of blocks (10) each having a respective seat (11) for hooking the peripheral edge of said at least one lid (7).

6. The thermally insulated cart (1) for depositing and transporting ice according to the preceding claim, **characterized in that** said blocks (10) are made of rubber.

7. The thermally insulated cart (1) for depositing and transporting ice according to either of claims 5 and 6, **characterized in that** said blocks (10) are configured and disposed in such a way as to enable said at least one lid (7) to be laterally inserted by translation parallel to the plane of positioning thereof.

8. The thermally insulated cart (1) for depositing and transporting ice according to any of claims 5 to 7, **characterized in that** it has means for removably fixing said blocks (10) to said at least one delimiting wall (2, 3, 4, 5).

9. The thermally insulated cart (1) for depositing and transporting ice according to any of the preceding claims, **characterized in that** it comprises a first lid (7) and at least a second lid (7) having an inside whose shape matches the outside of the first lid (7) so as to fit together with the first lid (7) when placed on top of it.

10. The thermally insulated cart (1) for depositing and transporting ice according to any of the preceding claims, **characterized in that** it includes means for fitting the peripheral edge of the inside of said at least one lid (7) to the top peripheral edge of the said body which delimits said access opening (6).

11. The thermally insulated cart (1) for depositing and transporting ice according to the preceding claim, **characterized in that** said fitting means comprise at least one projection (13) engageable with a corresponding recess of mating shape.

12. The thermally insulated cart (1) for depositing and transporting ice according to any of the preceding claims, **characterized in that** it has a handle (9) and means for removably fixing the handle (9) to the said body.

13. The thermally insulated cart (1) for depositing and transporting ice according to claim 12, **characterized in that** said means for removably fixing the handle (9) to said body comprise at least a channel (15) for inserting at least a terminal part (14) of the handle (9), fashioned in a front position in a side delimiting wall (4) of the said body, and at least one fastening bracket (16) fixed to said delimiting side wall (4) in a position on front of said channel (15).

14. The thermally insulated cart (1) transporting ice according to either of claims 12 and 13, **characterized in that** it has means for adjusting the height of the position in which the handle (9) is fixed to the said body.

15. A thermally insulated cart (1) for depositing and transporting ice according to any of the preceding claims, **characterized in that** said body has a longitudinal axis of extension and has at least front and rear wheels resting on the ground, and **in that** said delimiting walls are rigid and in combination with said at least one lid applied to said access opening (6) completely close said chamber for optimizing thermal insulation.
